# EUROPÄISCHE PATENTSCHRIFT

(11) **EP 0 314 733 B1**
(45) Veröffentlichungstag und Bekanntmachung des Hinweises auf die Patenterteilung: **01.05.1996**
(21) Anmeldenummer: 88904222.2
(22) Anmeldetag: 18.05.1988
(51) Int. Cl.: B01D 53/10, C04B 2/06

(54) **VERWENDUNG VON REAKTIONSFÄHIGEM CALCIUMHYDROXID FÜR DIE GAS- UND ABGASREINIGUNG SOWIE**
THE USE OF REACTIVE CALCIUM HYDROXIDE FOR PURIFYING GASES AND EXHAUST GASES
UTILISATION D'HYDROXYDE DE CALCIUM REACTIF POUR LA PURIFICATION DE GAZ ET DE GAZ D'ECHAPPEMENT

(30) Priorität: 18.05.1987 DE 3716566; 10.05.1988 DE 3815982; 16.05.1988 DE 3816595
(43) Veröffentlichungstag der Anmeldung: 10.05.1989
(60) Teilanmeldung: 92103175.3
(73) Patentinhaber: FTU GMBH, D-82319 Starnberg (DE)
(72) Erfinder: Suchenwirth, Hermann, Dr., D-8082 Grafrath (DE)
(86) Internationale Anmeldenummer: EP8800436
(87) Internationale Veröffentlichungsnummer: WO8809203

(56) Entgegenhaltungen:
- EP-A- 0 105 547
- EP-A- 0 107 582
- EP-A- 0 150 573
- EP-A- 0 173 640
- EP-A- 0 190 416
- EP-A- 0 201 468
- EP-A- 0 211 458
- EP-A- 0 289 810
- DE-A- 1 769 459
- DE-A- 2 948 305
- DE-A- 3 404 483
- DE-A- 3 439 059
- DE-A- 3 541 695
- FR-A- 2 529 802

## Beschreibung

Die Erfindung betrifft die Verwendung von feinpulvrigem, reaktionsfähigem Calciumhydroxid, bei dem bei der Herstellung vor dem Löschen, während des Löschens, mit dem zum Löschen erforderlichen Wasser und/oder nach dem Löschen die Reaktionsfähigkeit des Calciumhydroxids steigernde Stoffe zugesetzt wurden, und bei dem oberflächenaktive Substanzen in fein verteilter Form vor dem Löschprozeß zugesetzt wurden, zur Reinigung von Gasen und Abgasen von sauer wirkenden Schadstoffen, wie Chlorwasserstoff, Fluorwasserstoff, Schwefeldioxid, Blausaure udgl.,Stickstoffoxiden, polykondensierten aromatischen Kohlenwasserstoffen, wie Benzo(a)pyren, Dibenz(a,h)anthracen udgl., chlorierten Kohlenwasserstoffen, wie Dioxinen, Hexachlorbenzol und Pentachlorphenol und flüchtigen Schwermetallen, wie Quecksilber, Arsen, Antimon, Cadmium und Thallium.

Auf dem Gebiet der Abgasreinigung werden zahlreiche Verfahren angewendet. Neben der nassen Abgasreinigung kommt auch die trockene Abgasreinigung zum Einsatz. Sie besteht darin, in den zu reinigenden Abgasstrom pulverförmiges Calciumhydroxid einzublasen. Ziel ist, die im Abgasstrom vorhandenen sauren Schadstoffe, wie Schwefeldioxid, Chlorwasserstoff und Fluorwasserstoff, zu neutralisieren und die gebildeten Neutralsalze an geeigneten Abscheidevorrichtungen, z.B. Elektrofiltern und Gewebefiltern, abzuscheiden.

Die trockene Abgasreinigung wird in verschiedenen Varianten angewandt. Die wesentlichsten Einsatzgebiete sind die Reinigung der Abgase von Kohle- und Braunkohlekraftwerken, Müllverbrennungsanlagen, Sondermüllverbrennungsanlagen und Feuerungsanlagen mit unterschiedlichstem Einsatzmaterial.

Mit Hilfe der trockenen Abgasreinigung lassen sich die schadstoffhaltigen Abgase weitestgehend reinigen. Von Nachteil ist jedoch, daß der Verbrauch an Calciumhydroxid sehr hoch ist. Im allgemeinen beträgt der stöchiometrische Faktor 3,5 - 6. So werden z.B. bei Abfallverbrennungsanlagen anstelle der erforderlichen 10 - 12 kg Hydroxid durchwegs mehr als 30 kg Calciumhydroxid benötigt. Der mäßige Wirkungsgrad der trockenen Abgasreinigung ist darauf zurückzuführen, daß die einzelnen Calciumhydroxidteilchen nicht vollständig durchreagieren. Auf dem Calciumhydroxid bildet sich eine Schicht aus Reaktionsprodukten, die das weitere Eindringen der abzuscheidenden sauren Schadstoffe verhindert.

Es ist immer wieder versucht worden, den hohen Calciumhydroxidverbrauch zu senken. Ein Verfahren besteht darin, nach der Abgasreinigung das abgeschiedene Produkt, das aus nicht umgesetztem Calciumhydroxid und den gebildeten Reaktionsprodukten besteht, mechanisch durch Mahlen wiederaufzubereiten. Sinn und Zweck des Mahlens besteht darin, die äußeren nicht reaktionsfähigen Schichten abzutrennen. Ein weiteres Verfahren sieht eine Zwischenlagerung des Reaktionsproduktes vor und nach einer Lagerung von 1-2 Tagen einen erneuten Einsatz.

In der EP-A-01 416 wird ein Verfahren zur Abscheidung von Schadstoffen aus Verbrennungsgasen beschrieben.

Es dient der Abscheidung von Schwefeldioxid, Chlorwasserstoff und Stickstoffoxiden mit trockenen Sorbentien, z.B. Calciumhydroxid, in Kombination mit anderen Hydroxiden, u.a. auch mit Aluminiumhydroxid und Natriumhydroxid. Dabei wird besonderer Wert auf Verbindungen gelegt, die Wasser abspalten. Damit lassen sich saure Schadstoffe verbessert abscheiden.

Die DE-A-34 39 059 betrifft ein Absorptionsmittel für die Trockenentfernung von Schwefeldioxid aus Rauchgasen. Es werden Mangancarbonat und/oder Manganoxid als Zusatzmittel dem Calciumhydroxid zugefügt.

Es läßt sich SO2 gut abscheiden. Die Abscheidung von flüchtigen Schwermetallen und organischen Schadstoffen wird nicht erwähnt.

Die nachveröffentlichte Anmeldung EP-A-02 89 810 betrifft ein Verfahren zur Rückhaltung von Quecksilber aus Rauchgasen einer Verbrennungsanlage.

Es wird beansprucht, Quecksilber aus Verbrennungsanlagen mittels eines Gemisches aus Kalk und Grünkoks bzw. eines Grünkoks/Flugasche-Gemisches Schadgasen zu entfernen.

Aus den Beispielen (Flugasche/Grünkoks) ist jedoch ersichtlich, daß die Hg-Abscheidung ungenügend ist.

Ein weiteres Verfahren - DE-A-35 41 695 - betrifft die Schadstoffbeseitigung hinter der Naßlöschung in Kokerei-Löschtürmen bei gleichzeitiger Wasseraufbereitung.

Es wird beim Löschen von Koks hinter dem Löschturm eine trockene Chemiesorptionsfilter-Technik angesetzt, die mit chemiesorbierenden und gleichzeitig feuchteaufnehmende Massen beschickt wird.

Es sollen aus den Schwaden nach dem Löschturm Schwefeldioxid, Schwefelwasserstoff, Cyanide und Stickstoffoxide abgeschieden werden. Hinweise zur gemeinsamen Abscheidung von sauren Schadstoffen, Quecksilber und Dioxinen finden sich nicht.

Die Patentanmeldung FR-A-225 29 802 betrifft eine Masse zur Abscheidung von Quecksilber aus Gasen oder Flüssigkeiten. Die Masse zur Abscheidung besteht aus Schwefel sowie Aluminiumoxid, Kieselgel, und/oder Zementen. Auch diese Anmeldung hat keine Lösungen zur gemeinsamen Abscheidung von sauren Schadstoffen, Quecksilber und Dioxinen.

Nach der EP-A-01 07 582 wird Schwefel auf einen Träger zur Abscheidung von Quecksilber aufgetragen. Als Träger kommen nur anorganische Substanzen, wie Aluminiumoxid, Kieselgel oder Ton, in Frage. Kombinationen mit Calciumhydroxid werden nicht beschrieben. Damit ist die Abscheidung von Säuren nicht gewährleistet.

Die Anmeldung DE-A-29 48 305 betrifft ein Verfahren zur trockenen Reinigung von quecksilberhaltigen Gasen, insbesondere Abgasen, thermischer Prozesse.

Hierbei wird das Quecksilber aus den Gasen entfernt, indem die Gase mit Metallen und/oder Legierungen behandelt werden, die mit dem Quecksilber Amalgame bilden.

Nach diesem System ist die Abscheidung von Quecksilber, nicht jedoch von organischen Schadstoffen, möglich.

Nach der EP-A-01 73 640 werden basische, neutralisierende Pulver abgekühlt und in gekühltem Zustand in ein Gas eingeblasen, um saure Bestandteile des Gases zu entfernen. Als mögliche basische Substanzen wird auch Calciumhydroxid genannt.

Damit lassen sich saure Schadstoffe abscheiden, nicht jedoch im ausreichenden Maße Quecksilber und Dioxine.

Alle diese Verfahren sind jedoch von einer ungenügenden Wirksamkeit hinsichtlich der Steigerung der Reaktionsfähigkeit von Calciumhydroxid gekennzeichnet.

Unter Steigerung der Reaktionsfähigkeit des Ca(OH)2 wird die Verringerung der Ca(OH)2-Menge zur Erreichung eines bestimmten Abscheidegrades der sauren Schadstoffe verstanden. Ein niedriger stöchiometrischer Faktor Ca(OH)2/saure Schadstoffe bedeutet eine höhere Reaktionsfähigkeit.

Es besteht deshalb ein erhebliches Interesse, Calciumhydroxide herzustellen, die eine erhöhte Reaktionsfähigkeit gegenüber den sauren Schadstoffen der Abgase aufweisen. Weiterhin besteht ein Interesse daran, neben den sauren Schadstoffen des Abgases noch weitere Stoffe aus dem Abgas abzuscheiden. Dies sind insbesondere die Stickstoffoxide und die flüchtigen Schwermetalle, wie Quecksilber, Arsen, Cadmium und Thallium.

Zur Abscheidung von Quecksilber werden unterschiedliche Methoden angewandt. Bei der trockenen Abgasreinigung selbst ist es bisher nicht möglich gewesen, die Abscheidung von Quecksilber so weit zu steigern, daß die vorgeschriebenen Grenzwerte sicher eingehalten werden können. Das übliche Verfahren, den Quecksilbergehalt des Abgases zu vermindern, besteht darin, die Temperatur des Abgases durch Zugabe von Wasser so weit abzusenken, daß eine Bindung von Quecksilber an Calciumhydroxid erfolgt.

Dieses Verfahren hat jedoch den Nachteil, daß nach wie vor deutliche Mengen an Quecksilber im Abgas bleiben und dabei unkontrollierten Wasserzugaben Störungen in den nachgeschalteten Abscheidevorrichtungen auftreten können.

Außerdem besteht großes Interesse an der Abscheidung von polykondensierten aromatischen Kohlenwasserstoffen, wie Benzo(a)pyren, Dibenz(a,h)anthracen udgl. und chlorierten Kohlenwasserstoffen, wie Dioxinen, Hexachlorbenzol und Pentachlorphenol. Auch in diesem Fall soll die Abscheidung nicht in separaten Stoffen, sondern einstufig mit den sauren Schadstoffen durchgeführt werden.

Weiterhin wäre es von Vorteil, zusammen mit der Abscheidung saurer Schadstoffe auch den Gehalt an CO und/oder Gesamt-C zu verringern.

Der wesentliche Erfindungsgedanke wie er in den Ansprüchen 1 und folgende niedergelegt ist, besteht in der Verwendung von feinpulvrigem, reaktionsfähigem Calciumhydroxid, bei dem bei der Herstellung vor dem Löschen, während des Löschens, mit dem zum Löschen erforderlichen Wasser und/oder nach dem Löschen die Reaktionsfähigkeit des Calciumhydroxids steigernde Stoffe zugesetzt wurden, und bei dem oberflächenaktive Substanzen in fein verteilter Form vor dem Löschprozeß, oder dem Löschwasser oder nach dem Löschen dem Calciumhydroxid zugesetzt wurden, zur Reinigung von Gasen und Abgasen von sauer wirkenden Schadstoffen, wie Chlorwasserstoff, Fluorwasserstoff, Schwefeldioxid, Blausäure udgl., Stickstoffoxiden, polykondensierten aromatischen Kohlenwasserstoffen, wie Benzo(a)pyren, Dibenz(a,h)anthracen udgl. und chlorierten Kohlenwasserstoffen, wie Dioxinen, Hexachlorbenzol und Pentachlorphenol, und flüchtigen Schwermetallen, wie Quecksilber, Arsen, Antimon, Cadmium und Thallium, wobei dem Gas- bzw. dem Abgasstrom das feinpulvrige, reaktionsfähige Calciumhydroxid zugemischt wird, die Reinigung bei einer Temperatur in einem Bereich von 20 bis 400°C durchgeführt und das mit Schadstoffen beladene Hydroxid an Staubabscheidevorrichtungen wieder abgeschieden wird.

Eine besonders bevorzugte Ausführungsform des erfindungsgemäßen Verfahrens besteht nun darin, daß dem zum Löschen von Branntkalk erforderlichen Wasser die Reaktionsfähigkeit des Calciumhydroxids steigernde Stoffe und/oder schadstoffbindende Stoffe zugesetzt werden.

Mit Hilfe derartiger eingeschleuster Substanzen läßt sich dann die Reaktionsfähigkeit des Calciumhydroxids gezielt verändern.

Weiterhin kann Ca(OH)2 als Träger für andere, schadstoffbindende Stoffe benutzt werden.

Bei den zugesetzten Stoffen kann es sich dann um Verbindungen handeln, die selbst auf die Schadstoffe einwirken, oder um Substanzen, die den inneren Aufbau, die Struktur und die Oberfläche des Calciumhydroxids verändern.

Eine vorteilhafte Ausführung des erfindungsgemäßen Verfahrens besteht nun darin, daß Stoffe zugesetzt werden, die die Bindung saurer Schadstoffe, wie HCl, HF, SO2, SO3, NO2, HCN, Phenole, Carbonsäuren und dergl. begünstigen.

Unter diesen Stoffen werden vornehmlich Stoffe verstanden, die stark basisch wirken und deshalb bevorzugt mit den sauren Schadstoffen reagieren.

Demnach besteht eine vorteilhafte Ausführung des erfindungsgemäßen Verfahrens darin, als Stoffe zur Steigerung der Reaktionsfähigkeit Alkalihydrogencarbonate, Alkalihydroxide und/oder Alkalicarbonate zuzusetzen. Hierzu sind besonders geeignet: Natriumhydroxid, Natriumhydrogencarbonat und/oder Natriumcarbonat.

Diese Stoffe werden dem Löschwasser zugesetzt und dringen während des Ablöschprozeßes in das sich bildende Calciumhydroxidteilchen ein. Hierbei kann es auch zu weiteren Umsetzungen mit Calciumhydroxid kommen. Z.B. dürften sich Natriumhydrogencarbonat aber auch Natriumcarbonat mit Calciumhydroxid anteilig zu Calciumcarbonat unter Freisetzung von Natriumhydroxid umsetzen. Es liegt also bei Anwendung derartiger Stoffe ein komplexes Gemisch der verschiedensten basischen Stoffe vor.

Eine weitere Ausführung des erfindungsgemäßen Verfahrens besteht darin, als reaktionssteigernde Stoffe hydratbildende Verbindungen zuzusetzen. Unter Hydraten werden dabei anorganische Salze verstanden, an denen Wasser inform eines Anlagerungskomplexes angelagert ist. Bevorzugt werden hierbei hydratbildende Verbindungen eingesetzt, die bei erhöhter Temperatur einen Teil oder die Gesamtmenge des Hydratwassers abgeben. Die Entwässerung kann hierbei im Abgasstrom erfolgen.

Eine vorteilhafte Ausführungsform des erfindungsgemäßen Verfahrens besteht nun darin, daß das hydrathaltige Calciumhydroxid vor dem Einsatz zur Abgasreinigrnng einer thermischen Behandlung zur ganzen oder teilweisen Abgabe des Hydratwassers unterworfen wird. Damit können die Eigenschaften des Ca(OH)2, z.B. Oberfläche, gezielt verändert werden.

Die Anwesenheit von hydrathaltigen Verbindungen im Calciumhydroxidgefüge führt zu einer deutlichen Steigerung der Reaktionsfähigkeit des Calciumhydroxids.

Als hydratbildende Verbindung werden vorzugsweise Calciumchlorid und Magnesiumchlorid zugesetzt.

Calciumchlorid ist dafür bekannt, daß es Wasser zu verschiedenen Hydratationsstufen anlagert. Ein bekanntes Hydrat ist das Hexahydrat des Calciumchlorids. Dieses kann durch Erhitzen auf über 260 Grad C in Stufen zu wasserfreiem Chlorid entwässert werden. Wasserfreies Calciumchlorid seinerseits hat wieder das Bestreben, Wasser aufzunehmen, so daS auch während der Umsetzung bei der Abgasreinigung in das Innere des Calciumhydroxids kaum Wasser aufgenommen wird und damit die Reaktionsfähigkeit eine erhebliche Steigerung erfährt, z.B. gegenüber SO2.

Werden hydratbildende Stoffe dem Löschwasser zugesetzt, so ist es zweckmäßig, das zur Hydratbildung erforderliche Wasser dem Löschwasser zuzugeben.

Eine weitere Ausführungsform des erfindungsgemäßen Verfahrens besteht darin, Verbindungen zuzusetzen, die während des Löschprozeßes Hydroxide bilden, die ihrerseits im Temperaturbereich von 50 - 450°C entwässerbar sind.

Nahezu alle Metallsalze, die dem Löschwasser zugesetzt werden, bilden beim Löschprozeß Hydroxide. Nicht alle Hydroxide sind jedoch im Temperaturbereich von 50 - 450°C entwässerbar. Entwässerbare Hydroxide bilden z.B. die Schwermetallhydroxide.

Bei der Durchführung des erfindungsgemäßen Verfahrens kann nun so vorgegangen werden, daß das hydroxidhaltige Calciumhydroxid direkt eingesetzt wird. Andererseits kann es jedoch auch zweckmäßig sein, das hydroxidhaltige Calciumhydroxid vor dem Einsatz zur Abgasreinigung einer thermischen Behandlung zur ganzen oder teilweisen Entwässerung zu unterwerfen.

Durch die ganze oder teilweise Entwässerung kann die aktive Oberfläche des Calciumhydroxidkorns deutlich erhöht und damit die Reaktionsfähigkeit gesteigert werden.

Vorzugsweise werden Hydroxide eingesetzt, deren Entwässerung bei Temperaturen bis maximal 450°C erfolgt. Ab 450°C setzt die Entwässerung des Calciumhydroxids ein.

Erfindungsgemäß werden als hydroxidbildende Verbindungen wasserlösliche Eisen(II)- und/oder Eisen(III)-Salze, vorzugsweise als Chloride, eingesetzt. Eisen(II)- und/oder Eisen(III)-Salze werden vorzugsweise als Chloride eingesetzt. Eisen(II)- und Eisen(III)-Salze bilden im alkalischen Bereich Eisenhydroxide. Diese Eisenhydroxide können ihrerseits stufenweise entwässert werden. Diese Entwässerung kann dabei während der Abgasreinigung im Abgasstrom erfolgen. Es ist jedoch auch möglich, diese Abspaltung von Wasser ganz oder teilweise vor dem Einsatz zur Abgasreinigung durchzuführen. Auf diese Art und Weise können ganz gezielt wasserhaltige und wasserabgebende Calciumhydroxide, die trotzdem als trockenes Pulver vorliegen, hergestellt werden.

Sowohl bei den hydroxidhaltigen als auch bei den hydrathaltigen Calciumhydroxidpulvern handelt es sich um nichtklebende, leicht transportfähige und leicht in den Gasstrom einzubringende Pulver.

Als oberflächenaktive Substanzen, die Teil des Systems bilden, kommen Aktivkohle, Braunkohlen-Herdofenkoks, aktiviertes Aluminiumoxid und/oder Kieselgel in feiner Verteilung zur Anwendung. Die Wirkung dieser oberflächenaktiven Substanzen bezieht sich darauf, aus dem Abgasstrom Restgehalte an polykondensierten aromatischen Kohlenwasserstoffen, wie Benzo(a)pyren, Dibenz(a,h)anthracen udgl., chlorierten Kohlenwasserstoffen, die Dioxinen, Hexachlorbenzol und Pentachlorphenol, abzuscheiden. Diese Stoffe kommen in Gasen und Abgasströmen im allgemeinen in äußerst geringer Konzentration vor. Deren Abscheidung an herkömmlichen Abscheidevorrichtungen, sei es nun in Wäschern oder an elektrostatischen Abscheidern oder an Gewebefiltern macht Schwierigkeiten. Bei Einsatz von Calciumhydroxid, das noch oberflächenaktive Substanzen enthält, lassen sich diese Spurenstoffe an die oberflächenaktiven Substanzen binden und damit aus dem Abgasstrom entfernen.

Diese oberflächenaktive Stoffe sind zur Durchführung des erfindungsgemäßen Verfahrens besonders geeignet. Die Aktivkohle eignet sich besonders zur Bindung von organischen Substanzen und auch von Quecksilber. Kieselgel und Aluminiumoxid sind für polare Substanzen, wie oxidierte organische Verbindungen, und anorganische Schadstoffe, wie Chlorwasserstoff und Schwefeldioxid, besonders geeignet.

Durch die oberflächenaktiven Substanzen lassen sich die leicht flüchtigen Schwermetalle auch bei Temperaturen von 100 bis 200°C binden und abscheiden.

Eine bevorzugte Ausführungsform des erfindungsgemäßen Verfahrens besteht darin, als oberflächenaktive Substanzen Aktivkohle, Braunkohlen-Herdofenkoks, aktiviertes Aluminiumoxid und/oder Kieselgel in fein verteilter Art dem Löschwasser von Branntkalk zuzusetzen.

Weiterhin kann das erfindungsgemäße Verfahren derart durchgeführt werden, daß die oberflächenaktiven Substanzen bevor sie in den Löschprozeß für Branntkalk eingebracht werden, mit katalytisch wirkenden oder schadstoffbindenden Substanzen beaufschlagt werden. Dies kann derart durchgeführt werden, daß die katalytisch wirkenden oder schadstoffbindenden Substanzen im Löschwasser vorliegen und die oberflächenaktiven Substanzen zum Löschwasser gegeben werden. Durch längeres Stehen, evtl. über Stunden, adsorbieren die oberflächenaktiven Substanzen die Inhaltstoffe des Löschwassers. Nach dem Durchführen des Löschprozeßes liegen Calciumhydroxid und oberflächenaktive Substanzen in feinster Verteilung und bestens gemischt vor.

Mit Vorteil läßt sich dieser Erfindungsgedanke verwirklichen, wenn den oberflächenaktiven Substanzen vor dem Löschen mit quecksilberbindenden Stoffen, z.B. Natriumsulfid, Mercaptane oder Trimercapto-s-triazin, und /oder Vanadin-, Wolfram-, Molybdän-, Mangan-, Eisen-, Nickel-, Kobalt-, Chrom- und/oder Titanverbidnungen beaufschlagt werden. Für die Abgasreinigung liegen die katalytisch wirkenden oder quecksilberbindenden Substanzen dann in großer Oberfläche vor und vermögen ihre Wirksamkeit besonders zu entfalten.

Eine weitere Ausführungsform des erfindungsgemäßen Verfahrens besteht darin, daß zur Herstellung reaktionsfähiger Calciumhydroxide für die Gas- und Abgasreinigung die oberflächenaktiven Substanzen, wie Aktivkohle, Braunkohlen-Herdofenkoks, Aluminiumoxid und/oder Kieselgel udgl. dem Branntkalk zugemischt und dann erst der Löschprozeß durchgeführt wird.

Das Mischen kann entweder in Mischapparaturen oder auch in Mühlen durchgeführt werden.

In einer weiteren Ausführungsform der Erfindung werden nun dem zum Löschen des Branntkalkes erforderlichen Löschwasser quecksilberbindende Stoffe, vorzugsweise Schwefelwasserstoff, Natriumhydrogensulfid und/oder Trimercapto-s-triazin(TMT) und dergl., zugesetzt. TMT wird bevorzugt als Natriumsalz eingesetzt.

Durch die Kombination von Calciumhydroxid mit den quecksilberbindenden Stoffen wird erreicht, daß die durch einen charakteristischen Geruch ausgezeichneten Stoffe Schwefelwasserstoff und Natriumhydrogensulfid inform geruchloser Calciumsulfide eingesetzt werden können und die Neutralisation der sauren Schadstoffe gemeinsam mit der Bindung von Quecksilber durchgeführt werden kann. Auf diese Art und Weise können zusätzliche Abgasreinigungsstufen vermieden werden.

Eine weitere Ausführungsform des erfindungsgemäßen Verfahrens besteht also darin, sowohl säurebindende als auch stickstoffbindende wie auch schwermetallbindende Stoffe gemeinsam dem Löschwasser zuzusetzen und ein derartig modifiziertes Calciumhydroxid herzustellen.

Nach dem erfindungsgemäßen Verfahren können also Calciumhydroxide hergestellt werden, die oxidierende, reduzierende, neutralisierende und/oder schwermetallhaltige Stoffe enthalten. So ist es beispielsweise möglich, dem Löschwasser Zinn- und Zinkchlorid zuzusetzen, das dann in das Calciumhydroxid eingebunden wird. Die Metallsalze können z.B. mit Wasserstoff zu Zink bzw. Zinn reduziert werden. Dieses über das Calciumhydroxid fein verteilte Metall dient dann bevorzugt zur Aufnahme von Quecksilber aus dem Abgasstrom.

Als oxidierende oder reduzierende Stoffe sind mit Vorteil Schwermetalle einzusetzen. Es handelt sich dabei um die Schwermetalle, die in verschiedenen Oxidationsstufen vorkommen, nämlich Vanadin, Molybdän, Wolfram, Mangan, Titan, Kupfer, Chrom und Vanadin.

Diese Schwermetalle werden dem Löschwasser in Form wasserlöslicher Salze zugesetzt und können nach der Aufnahme in das Calciumhydroxid noch einer Reduktion oder Oxidation unterworfen werden.

Die schwermetallhaltigen Calciumhydroxide können neben der üblichen "Entwässerung" des Abgases auch zur weitergehenden Abgasreinigung verwendet werden. Z.B. kann Kohlenmonoxid zur Kohlendioxid oxidiert werden. Oxidiert werden können auch die im Abgas vorhandenen Kohlenwasserstoffe, so daß es zur Absenkung des Gesamt-C-Gehaltes kommt.

Der Reinigungsprozeß von Gasen kann hierbei in einem weiten Temperaturbereich von 20 - 400°C durchgeführt werden.

Zur Menge der einzusetzenden Stoffe ist festzustellen, daß sich diese nach der Menge des abzuscheidenden Schadstoffes und der Löslichkeit des jeweiligen Stoffes im Wasser richtet. Die Obergrenze des jeweiligen zuzusetzenden Stoffes richtet sich nach dessen Löslichkeit im Wasser.

Mit dem auf obige Weise hergestellten Calciumhydroxiden kann die Reaktionsfähigkeit des Ca(OH)2 deutlich gesteigert werden, d.h. der Verbrauch an Ca(OH)2 zur Abscheidung saurer Schadstoffe erheblich gesenkt werden. Gleichzeitig lassen sich noch flüchtige Schwermetalle, z.B. Quecksilber, Cadmium udgl., aus dem Abgasstrom abscheiden. Ein erheblicher Vorteil ist auch die simultane Abscheidung oder Konzentrationsminderung von sauren Schadstoffen und Stickstoffoxiden, die auch mit einer gleichzeitigen Schwermetallabscheidung verbunden werden kann.

Weiterhin lassen sich durch Zusätze zum Löschwasser physikalische Eigenschaften, wie Oberfläche, Fließverhalten, Verteilungsfähigkeit im Abgasstrom udgl. verändern und gezielt beeinflussen.

Die erfindungsgemäß hergestellten modifizierten Ca(OH)2-Verbindungen lassen sich nicht nur zur Schadstoffbindung sondern auch als Katalysatoren bei Oxidations- und Reduktionsvorgängen einsetzen.

## Patentansprüche

1. Verwendung von feinpulvrigem, reaktionsfähigem Calciumhydroxid, bei dem bei der Herstellung vor dem Löschen, während des Löschens, mit dem zum Löschen erforderlichen Wasser und/oder nach dem Löschen die Reaktionsfähigkeit des Calciumhydroxids steigernde Stoffe zugesetzt wurden, und bei dem oberflächenaktive Substanzen in fein verteilter Form vor dem Löschprozeß zugesetzt wurden, zur Reinigung von Gasen und Abgasen von sauer wirkenden Schadstoffen, wie Chlorwasserstoff, Fluorwasserstoff, Schwefeldioxid, Blausäure udgl., Stickstoffoxiden, Kohlenwasserstoffen, wie polykondensierte aromatische Kohlenwasserstoffe, z.B. Benzo(a)pyren, Dibenz(a,h)anthracen udgl., chlorierten Kohlenwasserstoffen, wie Dioxinen, Hexachlorbenzol und Pentachlorphenol, organischen Stoffen und flüchtigen Schwermetallen, wie Quecksilber, Arsen, Antimon, Cadmium und Thallium, wobei dem Gas- bzw. dem Abgasstrom das feinpulvrige, reaktionsfähige Calciumhydroxid zugemischt wird, die Reinigung bei einer Temperatur in einem Bereich von 20 bis 400°C durchgeführt und das mit Schadstoffen beladene Hydroxid an Staubabscheidevorrichtungen wieder abgeschieden wird.

2. Verwendung von feinpulvrigem, reaktionsfähigem Calciumhydroxid, bei dem bei der Herstellung vor dem Löschen, während des Löschens, mit dem zum Löschen erforderlichen Wasser und/oder nach dem Löschen die Reaktionsfähigkeit des Calciumhydroxids steigernde Stoffe zugesetzt wurden, und bei dem oberflächenaktive Substanzen in feinverteilter Form dem Löschwasser zugesetzt wurden, zur Reinigung von Gasen und Abgasen, von sauer wirkenden Schadstoffen, wie Chlorwasserstoff, Fluorwasserstoff, Schwefeldioxid, Blausäure udgl., Stickstoffoxiden, Kohlenwasserstoffen wie polykondensierte aromatische Kohlenwasserstoffe, z.B. Benzo(a)pyren, Dibenz(a,h)anthracen udgl., chlorierten Kohlenwasserstoffen, wie Dioxinen, Hexachlorbenzol und Pentachlorphenol, organischen Stoffen und flüchtigen Schwermetallen, wie Quecksilber, Arsen, Antimon, Cadmium und Thallium, wobei dem Gas- bzw. Abgasstrom das fein-pulvrige, reaktionsfähige Calciumhydroxid zugemischt wird, die Reinigung bei einer Temperatur in einem Bereich von 20 bis 400°C durchgeführt und das mit Schadstoffen beladene Hydroxid an Staubabscheidevorrichtungen wieder abgeschieden wird.

3. Verwendung von feinpulvrigem, reaktionsfähigem Calciumhydroxid, bei dem bei der Herstellung vor dem Löschen, während des Löschens, mit dem zum Löschen erforderlichen Wasser und/oder nach dem Löschen die Reaktionsfähigkeit des Calciumhydroxids steigernde Stoffe zugesetzt wurden, und bei dem oberflächenaktive Substanzen in feinverteilter Form dem Calciumhydroxid zugesetzt wurden, zur Reinigung von Gasen und Abgasen, von sauer wirkenden Schadstoffen, wie Chlorwasserstoff, Fluorwasserstoff, Schwefeldioxid, Blausäure udgl., stickstoffoxiden, Kohlenwasserstoffen, wie polykondensierte aromatische Kohlenwasserstoffe, z.B. Benzo(a)pyren, Dibenz(a,h)anthracen udgl., chlorierten Kohlenwasserstoffen, wie Dioxinen, Hexachlorbenzol und Pentachlorphenol, organischen Stoffen und flüchtigen Schwermetallen, wie Quecksilber, Arsen, Antimon, Cadmium und Thallium, wobei dem Gas- bzw. Abgasstrom das feinpulvrige, reaktionsfähige Calciumhydroxid zugemischt wird, die Reinigung bei einer Temperatur in einem Bereich von 20 bis 400°C durchgeführt und das mit Schadstoffen beladene Hydroxid an Staubabscheidevorrichtungen wieder abgeschieden wird.

4. Verwendung von feinpulvrigem, reaktionsfähigem Calciumhydroxid nach einem der vorhergehenden Ansprüche, wobei die oberflächenaktiven Substanzen ausgewählt sind aus der Gruppe Aktivkohle, Braunkohlen-Herdofenkoks, aktiviertes Aluminiumoxid und/oder Kieselgel .

5. Verwendung von feinpulvrigem, reaktionsfähigem Calciumhydroxid nach Anspruch 2, wobei bei der Herstellung zur Abscheidung von Quecksilber aus dem Abgas quecksilberbindende Stoffe, insbesondere Schwefelwasserstoff, Natriumhydrogensulfid, Natriumsulfid, Mercaptane und Trimercapto-s-Triazin, zugesetzt wurden.

6. Verwendung von feinpulvrigem, reaktionsfähigem Calciumhydroxid nach Anspruch 2, wobei bei der Herstellung katalytisch wirkende und/oder schwermetallbindende Stoffe zugesetzt wurden.

7. Verwendung von feinpulvrigem, reaktionsfähigem Calciumhydroxid nach Anspruch 2, wobei die oberflächenaktiven Substanzen vor der Zugabe zum Löschwasser mit katalytisch wirkenden Substanzen, wie Vanadin-, Wolfram-, Chrom-, Molybdän-, Mangan-, Eisen-, Nickel-, Kobalt- und/oder Titanverbindungen und/oder schadstoffbindende Substanzen, wie Natriumsulfid, Mercaptane oder Trimercapto-s-Triazin, zur Quecksilberbindung beaufschlagt wurden.

8. Verwendung von feinpulvrigem, reaktionsfähigem Calciumhydroxid nach einem der vorhergehenden Ansprüche, wobei bei Temperaturen von 100 bis 200°C flüchtige Schwermetalle gebunden und abgeschieden werden.

## Claims

1. Use of finely powdered reactive calcium hydroxide wherein substances that increase the reactivity of calcium hydroxide are added during the production before the slaking, during the slaking, together with the water required for slaking and/or after the slaking and wherein surface-active substances in a finely dispersed form are added before the slaking process in order to purify gases and waste gases of acidic pollutants such as hydrogen chloride, hydrogen fluoride, sulfur dioxide, hydrogen cyanide and such like, nitrogen oxides, hydrocarbons such as polycondensed aromatic hydrocarbons e.g. benzo(a)pyrene, dibenz(a,h)anthracene and such like, chlorinated hydrocarbons such as dioxines, hexachlorobenzene and pentachlorophenol, organic substances and volatile heavy metals such as mercury, arsenic, antimony, cadmium and thallium wherein the finely powdered, reactive calcium hydroxide is admixed with the gas or waste gas stream, the purification is carried out at a temperature in the range of 20 to 400°C and the hydroxide loaded with pollutants is again separated in dust separators.

2. Use of finely powdered reactive calcium hydroxide wherein substances that increase the reactivity of calcium hydroxide are added during the production before the slaking, during the slaking, together with the water required for the slaking and/or after the slaking and wherein surface-active substances are added in a finely dispersed form to the water for slaking in order to purify gases and waste gases of acidic pollutants such as hydrogen chloride, hydrogen fluoride, sulfur dioxide, hydrogen cyanide and such like, nitrogen oxides, hydrocarbons such as polycondensed aromatic hydrocarbons e.g. benzo(a)pyrene, dibenz(a,h)anthracene and such like, chlorinated hydrocarbons such as dioxines, hexachlorobenzene and pentachlorophenol, organic substances and volatile heavy metals such as mercury, arsenic, antimony, cadmium and thallium wherein the finely powdered reactive calcium hydroxide is admixed with the gas or waste gas stream, the purification is carried out at a temperature in the range of 20 to 400°C and the hydroxide loaded with the pollutants is again separated in dust separators.

3. Use of finely powdered reactive calcium hydroxide wherein substances that increase the reactivity of calcium hydroxide are added during the production before the slaking, during the slaking, together with the water required for slaking and/or after the slaking and wherein surface-active substances are added in a finely dispersed form to the calcium hydroxide in order to purify gases and waste gases of acidic pollutants such as hydrogen chloride, hydrogen fluoride, sulfur dioxide, hydrogen cyanide and such like, nitrogen oxides, hydrocarbons such as polycondensed aromatic hydrocarbons e.g. benzo(a)pyrene, dibenz(a,h)anthracene and such like, chlorinated hydrocarbons such as dioxines, hexachlorobenzene and pentachlorophenol, organic substances and volatile heavy metals such as mercury, arsenic, antimony, cadmium and thallium wherein the finely powdered reactive calcium hydroxide is admixed with the gas or waste gas stream, the purification is carried out at a temperature in the range of 20 to 400°C and the hydroxide loaded with the pollutants is again separated in dust separators.

4. Use of finely powdered reactive calcium hydroxide as claimed in one of the previous claims, wherein the surface-active substances are selected from the group comprising active charcoal, brown coal hearth furnace coke, activated aluminium oxide and/or silica gel.

5. Use of finely powdered reactive calcium hydroxide as claimed in claim 2, wherein mercury-binding substances and in particular hydrogen sulfide, sodium hydrogensulfide, sodium sulfide, mercaptans and trimercapto-s-triazine were added during the production in order to separate mercury from the waste gas.

6. Use of finely powdered reactive calcium hydroxide as claimed in claim 2, wherein catalytic substances and/or substances binding heavy metals are added during the production.

7. Use of finely powdered reactive calcium hyroxide as claimed in claim 2, wherein catalytic substances such as vanadium, tungsten, chromium, molybdenum, manganese, iron, nickel, cobalt and/or titanium compounds and/or substances that bind pollutants such as sodium sulfide, mercaptans or trimercapto-s-triazine are added to the surface-active substance before addition to the slaking water in order to bind mercury.

8. Use of finely powdered reactive calcium hydroxide as claimed in one of the previous claims, wherein volatile heavy metals are bound and separated at temperatures of 100 to 200°C.

## Revendications

1. Utilisation d'hydroxyde de calcium pulvérulent, apte à la réaction, dans lequel lors de la préparation avant l'extinction, pendant l'extinction, on a ajouté l'eau nécessaire pour l'extinction et/ou les substances augmentant l'aptitude à la réaction de l'hydroxyde de calcium après l'extinction, et dans lequel on a ajouté des substances tensioactives sous la forme finement divisée avant le procédé d'extinction, pour la purification des gaz et effluents gazeux des substances nocives à action acide, comme le chlorure d'hydrogène, le fluorure d'hydrogène, le dioxyde de soufre, l'acide prussique ou cyanhydrique et analogues, les oxydes d'azote, les hydrocarbures, tels que les hydrocarbures aromatiques polycondensés, par exemple le benzo(a)pyrène, le dibenz(a,h)anthracène et analogues, les hydrocarbures chlorés comme les dioxines, l'hexachlorobenzène et le pentachlorophénol, les substances organiques et les métaux lourds volatils, par exemple le mercure, l'arsénique, l'antimoine, le cadmium et le thallium, moyennant quoi au courant gazeux ou courant des effluents gazeux, on ajoute et on mélange l'hydroxyde de calcium pulvérulent apte à la réaction, on procède à la purification à une température dans une plage de 20 à 400°C et l'on sépare à nouveau l'hydroxyde chargé de substances nocives sur des appareils de dépoussiérage.

2. Utilisation d'hydroxyde de calcium pulvérulent, apte à la réaction, dans lequel lors de la préparation avant l'extinction, pendant l'extinction, on a ajouté l'eau nécessaire pour l'extinction et/ou les substances augmentant l'aptitude à la réaction de l'hydroxyde de calcium après l'extinction, et dans lequel on a ajouté des substances tensioactives sous la forme finement divisée dans l'eau d'extinction, pour la purification des gaz et effluents gazeux des substances nocives à action acide, comme le chlorure d'hydrogène, le fluorure d'hydrogène, le dioxyde de soufre, l'acide prussique ou cyanhydrique et analogues, les oxydes d'azote, les hydrocarbures, tels que les hydrocarbures aromatiques polycondensés, par exemple le benzo(a)pyrène, le dibenz(a,h)anthracène et analogues, les hydrocarbures chlorés comme les dioxines, l'hexachlorobenzène et le pentachlorophénol, les substances organiques et les métaux lourds volatils, par exemple le mercure, l'arsénique, l'antimoine, le cadmium et le thallium, moyennant quoi au courant gazeux ou courant des effluents gazeux, on ajoute et on mélange l'hydroxyde de calcium pulvérulent apte à la réaction, on procède à la purification à une température dans une plage de 20 à 400°C et l'on sépare à nouveau l'hydroxyde chargé de substances nocives sur des appareils de dépoussiérage.

3. Utilisation d'hydroxyde de calcium pulvérulent, apte à la réaction, dans lequel lors de la préparation avant l'extinction, pendant l'extinction, on a ajouté l'eau nécessaire pour l'extinction et/ou les substances augmentant l'aptitude à la réaction de l'hydroxyde de calcium après l'extinction, et dans lequel on a ajouté des substances tensioactives sous la forme finement divisée à l'hydroxyde de calcium, pour la purification des gaz et effluents gazeux des substances nocives à action acide, comme le chlorure d'hydrogène, le fluorure d'hydrogène, le dioxyde de soufre, l'acide prussique ou cyanhydrique et analogues, les oxydes d'azote, les hydrocarbures, tels que les hydrocarbures aromatiques polycondensés, par exemple le benzo(a)pyrène, le dibenz(a,h)anthracène et analogues, les hydrocarbures chlorés comme les dioxines, l'hexachlorobenzène et le pentachlorophénol, les substances organiques et les métaux lourde volatils, par exemple le mercure, l'arsénique, l'antimoine, le cadmium et le thallium, moyennant quoi au courant gazeux ou courant des effluents gazeux, on ajoute et on mélange l'hydroxyde de calcium pulvérulent apte à la réaction, on procède à la purification à une température dans une plage de 20 à 400°C et l'on sépare à nouveau l'hydroxyde chargé de substances nocives sur des appareils de dépoussiérage.

4. Utilisation d'hydroxyde de calcium pulvérulent apte à la réaction, selon l'une des revendications précédentes, les substances tensioactives ayant été sélectionnées dans la groupe constitué par le charbon actif, le coke de four à sole-lignite, oxyde d'aluminium activé et/ou gel de silice.

5. Utilisation d'hydroxyde de calcium pulvérulent réactionnel selon la revendication 2, dans laquelle on ajoute, lors de la préparation pour la séparation du mercure des effluents gazeux, des substances liant le mercure, en particulier l'acide sulfhydrique, l'hydrogénosulfure de sodium, le sulfure de sodium, le mercaptan et le trimercapto-s-triazine.

6. Utilisation d'hydroxyde de calcium pulvérulent apte à la réaction selon la revendication 2, dans laquelle on ajoute, lors de la préparation, des substances liant les métaux lourds et/ou ayant une action catalytique.

7. Utilisation d'hydroxyde de calcium pulvérulent apte à la réaction selon la revendication 2, dans laquelle on met en oeuvre les substances tensioactives avant l'addition à l'eau d'extinction avec des substances ayant une action catalytique comme les composés de vanadine, tungstène, chrome, molybdène, manganèse, fer, nickel, cobalt et/ou titane et/ou des substances liant les éléments nocifs, comme le sulfure de sodium, les mercaptans ou la trimercapto-s-triazine pour la liaison du mercure.

8. Utilisation d'hydroxyde de calcium pulvérulent apte à la réaction selon l'une des revendications précédentes, dans laquelle on lie et on sépare les métaux lourds volatils à des températures de 100 à 200°C.
